# EUROPÄISCHE PATENTSCHRIFT

(11) **EP 1 019 215 B1**
(45) Veröffentlichungstag und Bekanntmachung des Hinweises auf die Patenterteilung: **02.01.2002**
(21) Anmeldenummer: 98950077.2
(22) Anmeldetag: 24.09.1998
(51) Int. Cl.: B23D 63/00, B23D 63/14, B24B 47/22, B24B 49/10, B24B 3/02

(54) **MASCHINE ZUM BEARBEITEN VON WERKSTÜCKEN MIT SCHNEIDZÄHNEN, INSBESONDERE VON SÄGEBLÄTTERN**
MACHINE FOR MACHINING WORKPIECES WITH CUTTING TEETH, ESPECIALLY SAW BLADES
MACHINE POUR L'USINAGE DE PIECES AVEC DES DENTS COUPANTES, NOTAMMENT DES LAMES DE SCIE

(30) Priorität: 01.10.1997 DE 19743529
(43) Veröffentlichungstag der Anmeldung: 19.07.2000
(73) Patentinhaber: VOLLMER WERKE MASCHINENFABRIK GMBH, D-88400 Biberach (DE)
(72) Erfinder: BAILER, Norbert, D-88433 Schemmerhofen-Altheim (DE); BAILER, Peter, D-88433 Schemmerhofen (DE); LENARD, Peter, D-88400 Biberach (DE)
(74) Vertreter: Goetz, Rupert, Dipl.-Ing.
(86) Internationale Anmeldenummer: EP9806078
(87) Internationale Veröffentlichungsnummer: WO9916569

(56) Entgegenhaltungen:
- DE-A- 4 316 789
- DE-C- 19 630 057
- GB-A- 1 530 081
- US-A- 4 483 217

## Beschreibung

Die Erfindung betrifft eine Maschine nach dem Oberbegriff des Anspruchs 1.

Maschinen dieser Gattung sind zwar in erster Linie zum Schleifen der Zähne von Kreisägeblättern vorgesehen, sie eignen sich jedoch grundsätzlich auch zum Bearbeiten von Band- und Gattersägeblättern sowie Fräsern und dgl., und die Bearbeitung kann auch durch Elektroerosion mittels einer oder mehrerer rotierender Erodierscheiben stattfinden. Dementsprechend ist die vorliegende Erfindung nicht auf das Schleifen der Zähne von Kreissägeblättern beschränkt.

Unabhängig von der allgemeinen Form und vom Verwendungszweck der zu bearbeitenden Werkstücke sowie unabhängig von der Art der Bearbeitung muß vor deren Beginn an jedem einzelnen Werkstück ein Ausgangsmaß festgestellt werden, um das Werkstück für die Bearbeitung richtig positionieren zu können. So muß bei Kreissägeblättern deren Durchmesser festgestellt werden. Die vorgesehene Bearbeitungsstellung ist bei einer Maschine der genannten Gattung im allgemeinen diejenige, in der die Spitze des zu bearbeitenden Schneidzahns auf der als Schwenkachse definierten Achse der Maschine liegt. Unter der Zahnspitze ist eine scharfe Kante zu verstehen, in der sich eine Zahnbrust (Spanfläche) mit einem Zahnrücken (Freifläche) schneidet.

Um das für die Bearbeitung wesentliche Ausgangsmaß des Werkstücks, bei Kreissägeblättern ist dies deren Durchmesser, mit den an einer gattungsgemäßen Maschine vorhandenen Mitteln hinreichend genau messen zu können, ist es erforderlich, die Zahnspitze wenigstens eines Schneidzahns abzutasten, während die zugehörige Zahnbrust ihre Sollstellung einnimmt, die dadurch definiert ist, daß die Zahnbrust in einer die Schwenkachse der Maschine enthaltenden Ebene liegt.

Bei einer bekannten Maschine der genannten Gattung (DE 196 30 057 C1) ist vorgesehen, daß der Werkstückschlitten, auf dessen Werkstückhalterung ein zu bearbeitendes Werkstück aufgesteckt worden ist, numerisch gesteuert aus einer Ladestellung längs der Werkstückschlittenführung in eine Stellung verschoben wird, in der eine Zahnspitze in die Nähe der Schwenkachse der Maschine gelangt ist. Dies setzt voraus, daß das für die Bewegung des Werkstückschlittens wesentliche Maß - bei Kreissägeblättern also deren Durchmesser - wenigstens näherungsweise bekannt ist. Dies ist dann der Fall, wenn Werkstücke zu bearbeiten sind, die entweder neu sind oder im neuen Zustand maßgleich waren und sich nur durch Nachschärfen ihrer Zähne um unterschiedliche, jedoch in bestimmten Grenzen bleibende Beträge verändert haben. Unter dieser Voraussetzung kann für eine Vielzahl nacheinander zu bearbeitender Werkstücke eine bestimmte Strecke vorgegeben werden, um die der Werkstückschlitten aus seiner Ladestellung in eine Stellung verschoben wird, in der die Vorschubeinrichtung in eine Zahnlücke eingreifen kann, um die angrenzende Zahnbrust in ihre Sollstellung zu schieben, in der die Tasteinrichtung durch Abtasten der zugehörigen Zahnspitze deren Abstand von der Werkstückhalterung, bei einer Kreissäge also deren Radius, genau messen kann.

Schwierigkeiten ergeben sich jedoch dann, wenn auf der bekannten gattungsgemäßen Maschine nacheinander Werkstücke unterschiedlicher Abmessungen, beispielsweise Kreissägeblätter mit unterschiedlichen Durchmessern und möglicherweise auch noch unterschiedlichen Zahnteilungen, bearbeitet werden sollen. Es wäre sehr aufwendig, die Werkstücke in einem Magazin derart orientiert bereitzuhalten, daß schon beim Aufstecken jedes einzelnen Werkstücks auf die Werkstückhalterung Gewähr dafür besteht, daß eine Zahnspitze hinreichend genau zur Schwenkachse der Maschine hin orientiert ist und infolgedessen beim Vorschieben des Werkstückschlittens von der Tasteinrichtung mit ausreichender Genauigkeit abgetastet werden kann. Unterbleibt eine solche Vororientierung des Werkstücks, so besteht die Gefahr, daß die zum Abtasten des Sägeblattes in ihre Meßstellung gebrachte Tasteinrichtung der bekannten gattungsgemäßen Maschine in eine Zahnlücke eingreift und infolgedessen ein falsches Meßergebnis liefert, das ein kleineres Werkstück, beispielsweise ein Kreissägeblatt von kleinerem Durchmesser als tatsächlich vorhanden, vortäuscht. Würde die Maschine dann zu arbeiten beginnen, so wäre ein Beschädigung des Werkstücks und möglicherweise auch von Teilen der Maschine unvermeidbar. Deshalb hat man es bisher für unerlässlich gehalten, die relevanten Abmessungen der zu bearbeitenden Werkstücke im vorhinein in die bekannte gattungsgemäße Maschine einzugeben, damit jedes einzelne auf die Werkstückhalterung aufgesteckte Werkstück durch numerisch gesteuertes Verschieben des Werkstückschlittens in eine Stellung gelangt, in der die Vorschubeinrichtung in der beschriebenen Weise tätig werden kann, um einen Schneidzahn so zu orientieren, daß er von der Tasteinrichtung richtig abgetastet werden kann.

Demgegenüber liegt der Erfindung die Aufgabe zugrunde, eine Maschine zum Bearbeiten von Werkstücken mit Schneidzähnen, insbesondere von Kreissägeblättern, derart zu gestalten, daß der Maschine Werkstücke, die sich in ihren relevanten Maßen stark unterscheiden, in beliebiger Reihenfolge ohne Vororientierung zugeführt und dennoch vollautomatisch bearbeitet werden können.

Die Aufgabe ist erfindungsgemäß mit den Merkmalen des Anspruchs 1 gelöst.

Die erfindungsgemäße Gestaltung der Tasteinrichtung bietet Gewähr dafür, daß der in Bewegungsrichtung des Werkstückschlittens aus dessen Ladestellung zur Schwenkachse der Maschine hin vorderste Schneidzahn, auch wenn dessen Zahnspitze nicht zur Schwenkachse hin orientiert ist, ein Signal auslöst, sobald die Zahnspitze dieses Schneidzahns die Schranke erreicht. Auf diese Weise wird ein erstes das Werkstück kennzeichnendes Maß gewonnen, da der numerischen Steuerung die jeweilige Stellung des Werkstückschlittens und der Ort der Schranke bekannt sind. Der so am Werkstück gewonnene erste Meßwert weicht in der Regel von dem tatsächlich relevanten Maß des Werkstücks, bei einem Kreissägeblatt von dessen Durchmesser, noch zu sehr ab, als daß aufgrund dieses ersten Meßwertes schon mit einer anspruchsvollen Bearbeitung des Werkstücks begonnen werden könnte. Der erste Meßwert bedarf also in den meisten Fällen noch einer Korrektur, deren Größe aber mit einfachen Mitteln feststellbar ist, sobald die Vorschubeinrichtung in einer ansich bekannten Weise tätig geworden ist und eine Zahnbrust in die Sollstellung gebracht hat, in der sie in einer die Schwenkachse der Maschine enthaltenden Ebene liegt. Dabei braucht es sich nicht um die Zahnbrust des selben Schneidzahnes zu handeln, dessen Spitze ursprünglich abgetastet worden ist.

Das Abtasten der Zahnspitze desjenigen Schneidzahnes, dessen Zahnbrust durch die Vorschubeinrichtung in die Sollstellung gebracht worden ist, kann mit unterschiedlichen Mitteln geschehen. Eine Möglichkeit besteht darin, daß die Tasteinrichtung, mit der die erste Messung durchgeführt worden ist, nun erneut benutzt wird, um die erforderliche Korrektur des ursprünglichen Meßwertes zu ermitteln. Um diese Aufgabe erfüllen zu können, muß die Tasteinrichtung allerdings aufwendiger gestaltet werden, als dies für die Gewinnung nur des ersten Meßwertes erforderlich ist.

Es ist deshalb im allgemeinen vorzuziehen, daß für das erneute Abtasten des Werkstücks und zum Abgeben von Korrektursignalen eine von der Tasteinrichtung getrennte Korrektureinrichtung vorgesehen ist. Diese kann einen Taster aufweisen, der nur als solcher vorgesehen ist, also keine andere Aufgabe zu erfüllen hat.

Bei einer besonders vorteilhaften Ausführungsform der Erfindung ist jedoch das zum Bearbeiten der Werkstücke vorgesehene Werkzeug selbst Bestandteil der Korrektureinrichtung. Für das erneute Abtasten des Werkstücks wird also beispielsweise eine an der Maschine ohnehin vorhandene Schleif- oder Erodierscheibe verwendet. Diese kann wiederum in unterschiedlicher Weise als Signalgeber dienen, z.B. dadurch, daß Schwingungen gemessen werden, die entstehen, wenn das Werkstück vom Werkzeug berührt wird, während letzteres sich dreht.

Eine andere Möglichkeit, den zweiten Meßwert zu gewinnen, besteht darin, daß das Werkzeug ein elektrisch leitendes Glied eines Stromkreises ist, der über das Werkstück geschlossen wird.

Auch für die Schranke der ersten Tasteinrichtung gibt es mehrere Gestaltungsmöglichkeiten. Sie kann beispielsweise eine Lichtschranke bekannter Art sein. Da aber bei gattungsgemäßen Maschinen in einer mehr oder weniger weiten Umgebung des Werkzeugs mit Verschmutzungsgefahr gerechnet werden muß, ist es im allgemeinen vorzuziehen, eine Schranke in Form einer körperlichen Barriere vorzusehen, die jeweils nur bei Bedarf in eine Taststellung bewegt wird, während jeder Werkstückbearbeitung aber eine geschützte Ruhestellung einnimmt.

Vor allem bei einer solchen körperlichen Ausgestaltung der Schranke, die einen größeren Platzbedarf hat als eine Lichtschranke, ist eine Gestaltung gemäß Anspruch 5 vorteilhaft.

Weitere zweckmäßige Merkmale ergeben sich aus dem Anspruch 6.

Ein Ausführungsbeispiel der Erfindung wird im folgenden anhand schematischer Zeichnungen mit weiteren Einzelheiten beschrieben. Es zeigen:
- Fig.1: eine Schrägansicht einer erfindungsgemäßen numerisch gesteuerten Maschine zum Schleifen von Sägeblättern,
- Fig.2: einen vergrößerten Ausschnitt aus Fig.1, mit leicht geänderter Blickrichtung, in einer Einstellung zum Zahnrückenschleifen,
- Fig.3: einen weiter vergrößerten Ausschnitt von vorne,
- Fig.4: eine Draufsicht einer Tasteinrichtung der Maschine,
- Fig.5: aufeinanderfolgende Arbeitsstellungen der Maschine
- bis 8: in Teilansichten ähnlich Fig.3, und
- Fig.9: eine der Fig.3 entsprechende Ansicht der Maschine in einer Ausstattung und Einstellung zum Zahnbrustschleifen.

Als Beispiel für ein auf der abgebildeten Maschine zu bearbeitendes Werkstück 10 ist eine Kreissäge mit hartmetallbestückten Schneidzähnen 12 dargestellt, von denen jeder an seiner Zahnbrust 14 und an seinem Zahnrücken 16 zu schleifen ist, während seine Zahnspitze 18 eine vorbestimmte Stellung genau einhält.

Die abgebildete Maschine hat ein Maschinengestell 20, an dem ein langgestreckter Führungskörper 22 um eine im dargestellten Beispiel waagerechte Schwenkachse A schwenkeinstellbar gelagert ist. Die Schwenkachse A ist definiert als Schnittlinie einer senkrechten ersten Bezugsebene B und einer waagerechten zweiten Bezugsebene C. Längs des Führungskörpers 22 erstreckt sich eine Hubachse D, welche die Schwenkachse A unter einem rechten Winkel schneidet und die Bewegungsachse eines hin- und herbeweglichen Hubschlittens 24 darstellt. Längs einer Spindelachse E, welche die Hubachse D rechtwinklig schneidet und sich in der abgebildeten Normalstellung unter einem rechten Winkel zur Schwenkachse A erstreckt, ist am Hubschlitten 24 ein Werkzeugschlitten 26 zustellbar geführt. Der Werkzeugschlitten 26 ist um die Hubachse D aus seiner abgebildeten Normalstellung in beiden Richtungen schrägstellbar. Für den Fall, daß unter den zu bearbeitenden Schneidzähnen 12 solche sind, deren Zahnbrust 14 oder Zahnrücken 16 sich nicht, wie dargestellt, parallel zur Schwenkachse A erstreckt, wird der Werkzeugschlitten 26 entsprechend der Schräge der zu bearbeitenden Zahnbrust 14 bzw. des Zahnrückens 16 um die Hubachse D schräggestellt.

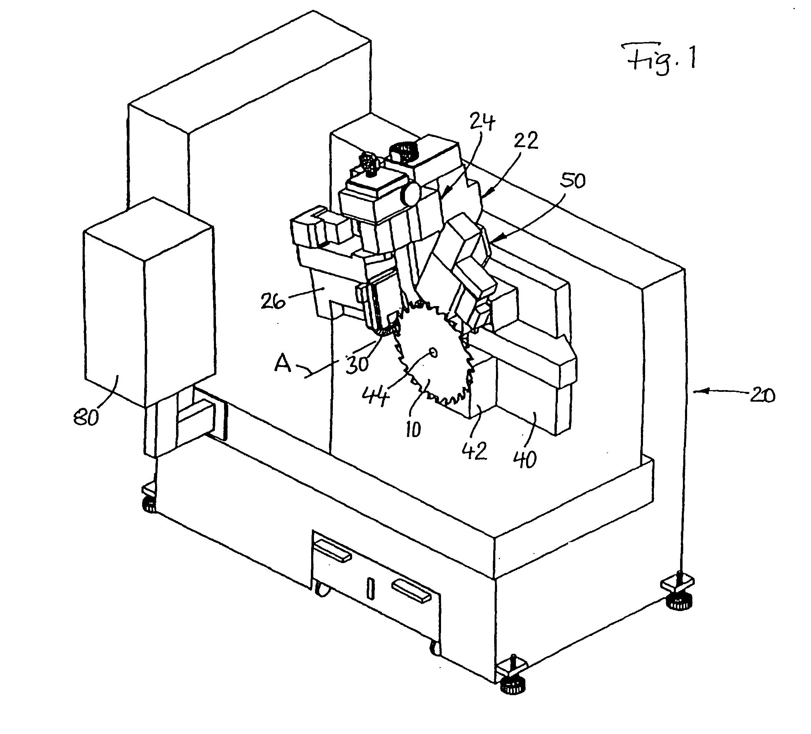

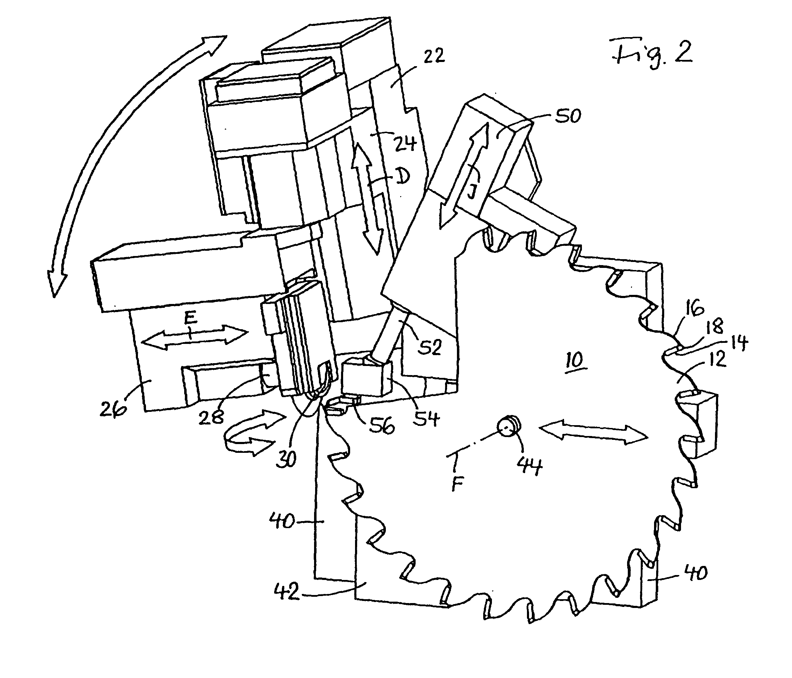

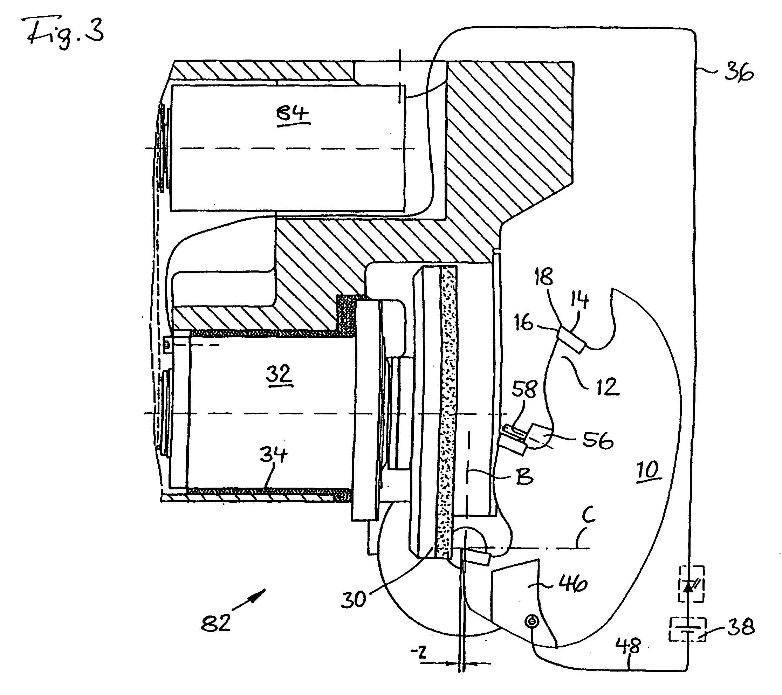

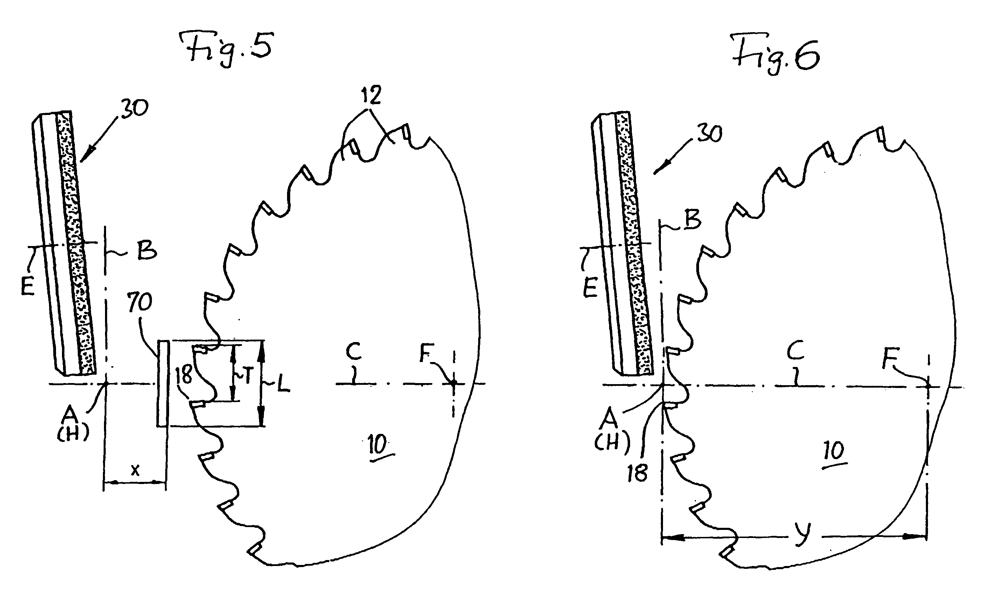

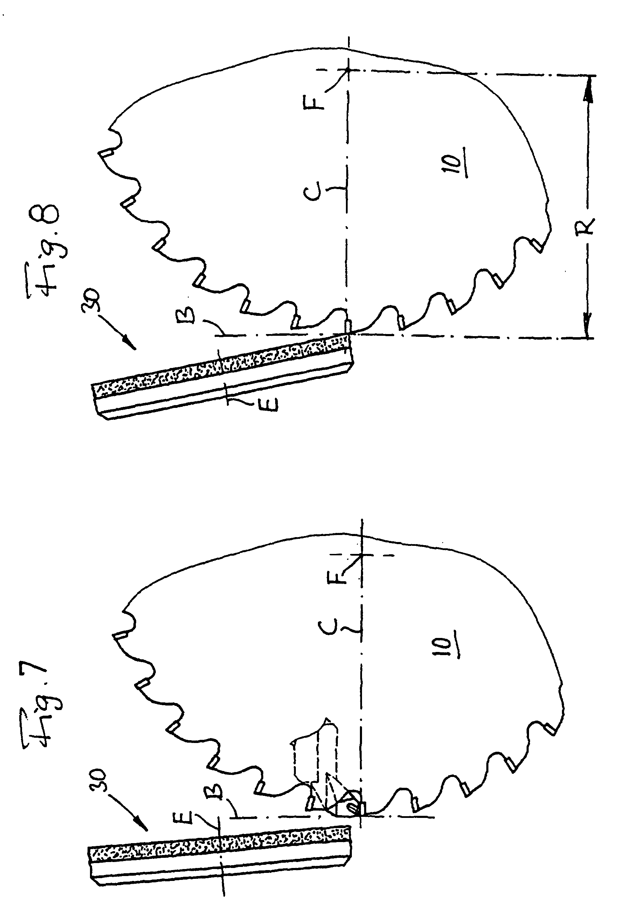

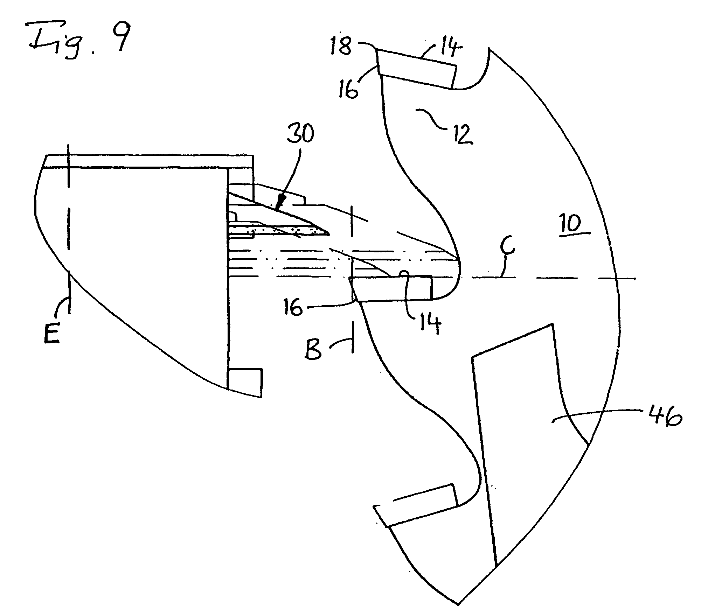

Die Spindelachse E ist die Achse einer am Werkzeugschlitten 26 gelagerten, drehantreibbaren Werkzeugspindel 28, an der sich ein Werkzeug 30 zum Bearbeiten des Werkstücks 10 befestigen läßt. Das Werkzeug 30 ist in Fig.2 als Schleifscheibenkombination bekannter Art dargestellt, bei der eine topfförmige Schleifscheibe und eine tellerförmige Schleifscheibe Rücken an Rücken miteinander verbunden sind. In Fig.3 und 5 bis 8 ist das Werkzeug 30 der Einfachheit halber nur als topfförmige Schleifscheibe dargestellt, in Fig.9 hingegen nur als tellerförmige Schleifscheibe. Anstatt dieser Schleifscheiben oder Schleifscheibenkombination kann als Werkzeug 30 auch eine Erodierscheibe oder eine Kombination zweier Erodierscheiben für elektroerosive Werkstückbearbeitung vorgesehen sein.

Die Werkzeugspindel 28 ist in einem Lagergehäuse 32 gelagert, das mittels einer Isolierhülse 34 elektrisch isoliert am Werkzeugschlitten 26 gehalten und über eine elektrische Leitung 36 mit einer Stromquelle 38 verbunden ist.

An der Vorderseite des Maschinengestells 20 ist eine im dargestellten Beispiel ortsfeste waagerechte Werkstückschlittenführung 40 angeordnet, die sich unter einem rechten Winkel zur Schwenkachse A erstreckt. Längs der Werkstückschlittenführung 40 ist ein Werkstückschlitten 42 verschiebbar, der eine Werkstückhalterung 44 trägt. Im dargestellten Beispiel mit einem Kreissägeblatt als Werkstück 10 gehört zur Werkstückhalterung 44 ein Dorn, der eine zur Schwenkachse A parallele Drehachse F für das Werkstück 10 definiert; auf diesen Dorn wird das Werkstück 10 zentrisch aufgesteckt. Der Werkstückschlitten 42 soll zum Bearbeiten der Schneidzähne 12 eine Betriebsstellung gemäß Fig.1 bis 3, 8 und 9 einnehmen, bei welcher der um die Drehachse F geschlagene Kreis, auf dem die Zahnspitzen 18 des Werkstücks 10 liegen, die Schwenkachse A schneidet. Somit läßt sich das Werkstück 10 schrittweise in Bearbeitungsstellungen drehen, in denen jeweils eine Zahnspitze 18 auf der Schwenkachse A liegt.

Die zur Drehachse F normale, im dargestellten Beispiel also senkrechte Mittelebene G des Werkstücks 10 ist so angeordnet, daß sie die Hubachse D enthält. In dieser Stellung wird das Werkstück 10 zwischen zwei Klemmbacken 46 einer Klemmeinrichtung eingespannt. Die Zahnspitze 18 des zu bearbeitenden Schneidzahns 12 ist dabei in einem Punkt H angeordnet, in dem die Schwenkachse A die Mittelebene G durchstößt. Die Klemmeinrichtung ist im wesentlichen von üblicher Bauart, hat jedoch die Besonderheit, daß eine der Klemmbacken 46 durch eine elektrische Leitung 48 an die Stromquelle 38 angeschlossen ist, so daß sich ein elektrischer Stromkreis schließt, wenn das Werkstück 10 vom Werkzeug 30 berührt wird.

Für schrittweise stattfindende Vorschubbwegungen, im dargestellten Beispiel Drehbewegungen, des Werkstücks 10 weist die dargestellte Maschine eine Vorschubeinrichtung 50 mit einer Stange 52 auf, die längs einer Vorschubachse I gesteuert ausfahrbar ist und an ihrem Ende einen Vorschubkopf 54 trägt. Am Vorschubkopf 54 ist parallel zur Schwenkachse A ein Querschlitten 56 verschiebbar geführt, der einen Vorschubfinger 58 trägt. Der Querschlitten 56 nimmt normalerweise eine Ruhestellung ein, in welcher der Vorschubfinger 58 abseits der Mittelebene G angeordnet ist; nur wenn eine Vorschubbewegung auszuführen ist, wird der Querschlitten 56 parallel zur Schwenkachse A in eine Stellung bewegt, in welcher der Vorschubfinger 58 in die Zahnlücke vor dem nächsten zu bearbeitenden Schneidzahn 12 eintaucht und sodann durch Ausfahren der Stange 52 gegen die Zahnbrust 14 dieses Schneidzahns drückt und sie in die beschriebene Stellung schiebt, in der die Zahnspitze 18 mit dem Punkt H übereinstimmt.

Im dargestellten Beispiel ist die Vorschubeinrichtung 50 so gesteuert, daß sie diesen Vorgang mit dem nächstfolgenden Schneidzahn 12 wiederholt, so daß erst dieser endgültig in der genannten Stellung stehenbleibt und anschließend bearbeitet wird, nachdem das Werkstück 10 zwischen den Klemmbacken 46 festgeklemmt worden ist. Es ist möglich, daß der Vorschubfinger 58 nicht sofort nach dem Einschalten der Vorschubeinrichtung 50 in eine Zahnlücke des Werkstücks 10 eingreift, weil beim Aufstecken des Werkstücks 10 und beim anschließenden Vorschieben des Werkstückschlittens 42 noch nicht dafür gesorgt ist, daß die Zahnspitze 18 des ersten zu bearbeitenden Schneidzahns 12 schon in der zweiten Bezugsebene C liegt. Um dies jedoch letzten Endes zu gewährleisten, sind die folgenden Maßnahmen vorgesehen:

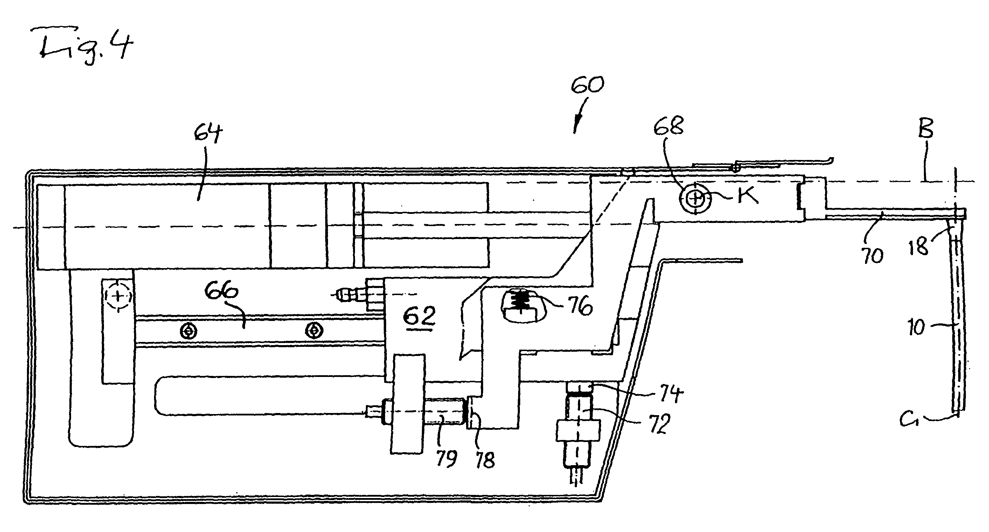

Zu der Maschine gehört eine in Fig.4 dargestellte Tasteinrichtung 60 mit einem Tastschlitten 62, der mittels einer hydraulischen oder pneumatischen Kolben-Zylindereinheit 64 längs einer zur Schwenkachse A parallelen Linearführung 66, also normal zur Mittelebene G, zwischen einer Ruhestellung und der in Fig.4 abgebildeten Taststellung hin- und herschiebbar ist. Am Tastschlitten 62 ist mittels eines Gelenks 68 eine Schranke 70 gelagert; das Gelenk 68 definiert eine Drehachse K, die zur Mittelebene G sowie zur ersten Bezugsebene B parallel, und somit im dargestellten Beispiel senkrecht ist. Die Schranke 70 erstreckt sich parallel zur ersten Bezugsebene B, ist dieser in einem Abstand X vorgelagert und hat, in der Mittelebene G gemessen, eine Länge L, die größer ist als die größte vorkommende Zahnteilung T der zu bearbeitenden Werkstücke 10. Diese in Fig.5 dargestellten Verhältnisse bieten Gewähr dafür, daß die Vorwärtsbewegung des Werkstückschlittens 42 mit einem auf seine Werkstückhalterung 44 aufgesteckten Werkstück 10 unterbrochen wird, wenn die am weitesten nach vorne weisende Zahnspitze 18 den Abstand X von der zweiten Bezugseben C hat.

Der Tastschlitten 62 trägt einen Schalter 72, im dargestellten Beispiel einen elektroinduktiven Endschalter, dem ein ortsfester Anschlag 74 zugeordnet ist. Der Werkstückschlitten 42 ist ebenso wie der Hubschlitten 24 und der Werkzeugschlitten 26 numerisch gesteuert und läßt sich nach dem Aufstecken eines zu bearbeitenden Werkstücks 10 auf die Werkstückhalterung 44 erst dann in Gang setzen, wenn der Schalter 72 gemeldet hat, daß der Tastschlitten 62 ausgefahren ist, die Schranke 70 also ihre in Fig.4 abgebildete Taststellung erreicht hat. Die Schranke 70 ist von einer Feder 76 nomalerweise in ihrer abgebildeten, zur ersten Bezugsebene B parallelen Lage gehalten, wird aber durch Anstoßen einer Zahnspitze 18 um die Drehachse K geschwenkt und betätigt dabei einen ihr zugeordneten Schaltkontakt 78, der ein Signal an die numerische Steuerung 80 der Maschine abgibt. Dadurch wird die Vorwärtsbewegung des Werkstückschlittens 42 unterbrochen, und dann wird die Kolben-Zylindereinheit 64 betätigt, so daß der Tastschlitten 62 samt Schranke 70 in die Ruhestellung der Tasteinrichtung 60 zurückgezogen wird. Nun ist der Weg für das Werkstück 10 frei und der Werkstückschlitten 42 wird um die Strecke X weiterbewegt, so daß die Zahnspitze 18, die gegen die Schranke 70 gestoßen war, gemäß Fig.6 in die erste Bezugsebene B gelangt, wobei sie, vom Zufall abhängig, mehr oder weniger weit ober- oder unterhalb der zweiten Bezugsebene C, also noch nicht im Schnittpunkt H, angeordnet ist.

Nun wird die Vorschubeinrichtung 50 in der beschriebenen Weise betätigt und damit letzten Endes erreicht, daß eine Zahnspitze 18 in der zweiten Bezugsebene C liegt. Infolge der Kreisbogenform der von dieser Zahnspitze 18 soeben ausgeführten Bewegung ist die Zahnspitze 18 jedoch nicht in der ersten Bezugsebene B geblieben sondern hat diese um einen zwar geringen, für die Bearbeitung jedoch nicht tolerierbaren Betrag Z überschritten, der durch erneutes Abtasten der Zahnspitze 18 festzustellen und zu korrigieren ist.

Für dieses erneute Abtasten wird das drehantreibbare Werkzeug 30, im dargestellten Beipiel also die topf- bzw. tellerförmige Schleifscheibe verwendet. Das Werkzeug 30 ist elektrisch leitend und somit in der Lage, über die elektrischen Leitungen 36 und 48 sowie die Stromquelle 38 einen Stromkreis zu schließen. Um eine Beschädigung der abzutastenden Zahnspitze 18 zu vermeiden, wird das Werkzeug 30 zum Abtasten nicht mit seiner normalen Betriebsdrehzahl angetrieben, die beim Schleifen üblicherweise in der Größenordnung von 3000 bis 5000 U/min liegt, sondern mit einer Drehzahl von beispielsweise 50 bis 300 U/min, also in der Größenordnung zwischen 1% und 10% der Betriebsdrehzahl. Zu diesem Zweck wird das Werkzeug 30 von einem Elektromotor 84 angetrieben, der in bekannter Weise über einen Frequenzwandler gespeist wird. Die geringe zum Abtasten vorgesehene Drehzahl genügt, um Schneidemulsion, Verschmutzungen und dgl. vom Werkzeug 30 abzuschleudern und sorgt ferner dafür, daß geringfügige Taumelbewegungen und Ausbröckelungen des Werkzeugs 30 ohne Einfluß auf die Abtastgenauigkeit bleiben.

Das Werkzeug 30 wird also mittels des Werkzeugschlittens 26 soweit zugestellt, bis das Werkzeug die ihm zugewandte Zahnspitze 18 leicht berührt und infolgedessen über das Werkstück 10 den von der Stromquelle 38 gespeisten Stromkreis schließt. Dadurch wird ein Signal ausgelöst, das die Steuerung 80 veranlaßt, die vom Werkstückschlitten 42 eingenommene Stellung mit derjenigen zu vergleichen, die der Werkstückschlitten beim Anstoßen des Werkstücks 10 an die Schranke 70 eingenommen hatte, woraus ein das Werkstück 10 kennzeichnender Näherungswert Y, bei einem Kreissägeblatt also dessen ungefährer Radius, errechnet worden ist. Wird nun beim erneuten Abtasten des Werkstücks 10 festgestellt, daß dessen in der zweiten Bezugsebene C liegende Zahnspitze 18 um den Betrag Z über die erste Bezugsebene B hinausragt, so wird der Werkstückschlitten 42 um den Betrag Z zurückgefahren mit der Folge, daß die Zahnspitze 18 nun auf der Schwenkachse A liegt. Der genaue Radius R des Werkstücks 10 ergibt sich aus der Gleichung R = Y + Z.

Falls das Werkstück 10 Vor- und Nachschneidezähne von unterschiedlicher Höhe aufweist, wird der beschriebene Meßvorgang wiederholt, so daß für beide Zahnarten je ein maßgebender Radius bzw. Durchmesser des Werkstücks 10 festgestellt wird.

Das Prinzip, ein elektrisch leitendes Werkstück 10 mittels eines ebenfalls elektrisch leitenden Werkzeugs 30 abzutasten, läßt sich für verschiedenartige Messungen nutzen. Beispielsweise kann gemäß Fig.9 eine als Werkzeug 30 vorgesehene tellerförmige Schleifscheibe bei einer numerisch gesteuerten Bewegung des Hubschlittens 24 die Zahnlückentiefe des Werkstücks 10 abtasten und kann ferner durch Zustellen des Werkzeugschlittens 26 die Lage der Zahnbrust 14 kontrollieren.

Falls zu befürchten ist, daß Ungenauigkeiten in der Positionierung des Werkstücks 10 dadurch entstehen, daß der Werkstückschlitten 42 in der beschriebenen Weise hin- und herbewegt wird, kann die Strecke X kleiner als dargestellt bemessen werden. Dies hat zur Folge, daß die gemäß Fig. 5 und 6 vorderste Zahnspitze 18 bei der beschriebenen Bewegung des Werkstückschlittens 42 um die Strecke x die erste Bezugsebene B noch nicht erreicht, und daß auch nach der Vorschubbewegung des Werkstücks 10, bei der diese Zahnspitze 18 in die zweite Bezugsebene C gelangt, noch eine Strecke + Z zurückzulegen bleibt, damit die Zahnspitze 18 schließlich auch die erste Bezugsebene B erreicht und somit auf der Schwenkachse A liegt. Der Betrag + Z läßt sich in entsprechender Weise wie der Betrag - Z (Fig. 3) durch Abtasten mit dem Werkzeug 30 in seiner Eigenschaft als Bestandteil einer Meß- und Korrektureinrichtung 82 ermitteln und korrigieren.

## Patentansprüche

1. Maschine zum Bearbeiten von Werkstücken (10) mit Schneidzähnen (12), insbesondere von Sägeblättern, mit
- einem Maschinengestell (20), an dem eine Schwenkachse (A) festgelegt ist,
- einem Führungskörper (22), der eine quer zur Schwenkachse (A) verlaufende Hubachse (D) definiert,
- einem Hubschlitten (24), der am Führungskörper (22) längs der Hubachse (D) verschiebbar geführt ist,
- einem Werkzeugschlitten (26), der eine zur Hubachse (D) querverlaufende Spindelachse (E) definiert und längs dieser zustellbar am Hubschlitten (24) geführt ist,
- einer Werkzeugspindel (28), die am Werkzeugschlitten (26) um die Spindelachse (E) drehantreibbar gelagert und mit einem drehantreibbaren Werkzeug (30) bestückbar ist,
- einer Werkstückschlittenführung (40), die sich quer zur Schwenkachse (A) erstreckt und mit der Hubachse (D) einen einstellbaren Winkel einschließt,
- einem Werkstückschlitten (42), der an der Werkstückschlittenführung (40) geführt ist und mit einer an ihm ausgebildeten Werkstückhalterung (44) eine zur Schwenkachse (A) normale Mittelebene (G) definiert,
- einer Tasteinrichtung (60), die zum Ermitteln des Abstandes der Schneidzähne (12) des Werkstücks (10) von der Werkstückhalterung (44) zumindest zeitweise eine Meßstellung einnimmt, in welche die Zahnspitze (18) eines in Richtung Schwenkachse (A) weisenden Schneidzahns (12) eines in der Werkstückhalterung (44) aufgenommenen Werkstücks (10) gelangt, wenn der Werkstückschlitten (42) aus einer von der Schwenkachse (A) entfernten Ladestellung in Richtung Schwenkachse (A) verschoben wird,
- einer Vorschubeinrichtung (50) mit einem Vorschubfinger (58), der intermittierend an jeweils eine Zahnbrust (14) anlegbar ist, um diese in eine Sollstellung vorzuschieben, in der sie in einer die Schwenkachse (A) enthaltenden Ebene liegt, und
- einer numerischen Steuerung (80) für Bewegungen des Werkzeugschlittens (26) und des Werkstückschlittens (42) in Abhängigkeit von Signalen der Tasteinrichtung (60),
**dadurch gekennzeichnet, daß**
- die Tasteinrichtung (60) eine Schranke (70) aufweist, die, in der genannten Mittelebene (G) quer zur Werkstückschlittenführung (40) gemessen, eine Länge (L) hat, welche größer als die größte vorkommende Zahnteilung (T) der Werkstücke (10) ist,
- die Steuerung (80) so programmiert ist, daß die Tasteinrichtung (60) vor der Vorschubeinrichtung (50) tätig wird, um die Zahnspitze (18) eines Schneidzahns (12) ohne Rücksicht auf die Lage der zugehörigen Zahnbrust (14) abzutasten, und
- die Steuerung (80) ferner so programmiert ist, daß das Werkstück (10) an der Zahnspitze (18) des Schneidzahns (12), dessen Zahnbrust (14) ihre Sollstellung einnimmt, erneut abgetastet und die Stellung des Werkstückschlittens (42) korrigiert wird, wenn diese Zahnspitze (18) nicht auf der Schwenkachse (A) liegt.

2. Maschine nach Anspruch 1,
**dadurch gekennzeichnet, daß** für das erneute Abtasten des Werkstücks (10) und zum Abgeben eines Korrektursignals eine von der Tasteinrichtung (60) getrennte Korrektureinrichtung (82) vorgesehen ist.

3. Maschine nach Anspruch 2,
**dadurch gekennzeichnet, daß** das zum Bearbeiten der Werkstücke (10) vorgesehene Werkzeug (30) selbst Bestandteil der Korrektureinrichtung (82) ist.

4. Maschine nach Anspruch 3,
**dadurch gekennzeichnet, daß** das Werkzeug (30) ein elektrisch leitendes Glied eines Stromkreises ist, der über das Werkstück (10) geschlossen wird.

5. Maschine nach einem der Ansprüche 1 bis 4,
**dadurch gekennzeichnet, daß**
- die Schranke (70) der Schwenkachse (A) um eine bestimmte Strecke (X) vorgelagert ist,
- die Steuerung (80) so programmiert ist, daß der Werkstückschlitten (42) jeweils um diese Strecke (X) weiterbewegt wird, nachdem die Steuerung ein bei der Ankunft eines Schneidzahns (12) an der Schranke (70) ausgelöstes Signal erhalten hat, und
- die Steuerung (80) ferner so programmiert ist, daß die Vorschubeinrichtung (50) erst tätig wird, wenn der Werkstückschlitten (42) die genannte Strecke (X) zurückgelegt hat.

6. Maschine nach einem der Ansprüche 1 bis 5,
**dadurch gekennzeichnet, daß** die Vorschubeinrichtung (50) so gesteuert ist, daß
- ihr Vorschubfinger (58) jeweils in eine erste Zahnlücke des Werkstücks (10) eingereift,
- den Schneidzahn (12), dessen Zahnspitze (18) von der Tasteinrichtung (60) abgetastet worden ist, über die Sollstellung seiner Zahnbrust (14) hinaus vorschiebt,
- der Vorschubfinger (58) sich dann zurückbewegt, wobei er den nächstfolgenden Schneidzahn (12) überspringt,
- der Vorschubfinger (58) dann in die auf ihn folgende Zahnlücke eingreift und bei einer erneuten Vorwärtsbewegung die Zahnbrust (14) dieses nächstfolgenden Schneidzahns (12) in die Sollstellung vorschiebt.

## Claims

1. A machine for machining workpieces (10) which have cutting teeth (12), especially saw blades, comprising
- a machine bed (20) on which a pivot axis (A) is fixed,
- a guide body (22) which defines a lift axis (D) extending transversely of the pivot axis (A),
- a reciprocating slide (24) which is guided on the guide body (22) for reciprocating along the lift axis (D),
- a saddle (26) which defines a spindle axis (E) extending transversely of the lift axis (D) and is guided on the reciprocating slide (24) for infeeding motion,
- a tool spindle (28) which is supported on the saddle (26) so as to be driven in rotation about the spindle axis (E) and is adapted to receive a tool (30) adapted to be driven in rotation,
- a workpiece slide guide means (40) which extends transversely of the pivot axis (A) and defines an adjustable angle with the lift axis (D),
- a workpiece slide (42) which is guided on the workpiece slide guide means (40) and defines a central plane (G), at right angles to the pivot axis (A), together with a workpiece support (44) formed on the workpiece slide (42),
- a feeler means (60) which determines the distance of the cutting teeth (12) of the workpiece (10) from the workpiece support (44), adopting a measuring position, at least at times, which is reached by the tooth tip (18) of a cutting tooth (12), oriented in the direction of the pivot axis (A), of a workpiece (10) received in the workpiece support (44) when the workpiece slide (42) is shifted in the direction of the pivot axis (A) from a loading position remote from said pivot axis (A),
- an advance means (50) including an advance finger (58) adapted for intermittent engagement with a respective tooth face (14) so as to advance the same into a desired position at which it lies in a plane including the pivot axis (A), and
- a numerical control means (80) for controlling movements of the saddle (26) and the workpiece slide (42) in response to signals from the feeler means (60)
**characterized in that**
- the feeler means (60) comprises a barrier (70) the length(L) of which, as measured in said central plane (G) transversely of the workpiece slide guide means (40), is greater than the greatest tooth pitch (T) occurring of workpieces (10).
- the control means (80) is programmed such that the feeler means (60) becomes active before the advance means (50) so as to scan the tooth tip (18) of a cutting tooth (12) irrespective of the position of the corresponding tooth face (14), and
- the control means (80) furthermore is programmed such that the workpiece (10) is scanned once more at the tooth tip (18) of the cutting tooth (12) whose tooth face (14) is in the desired position, and the position of the workpiece slide (42) is corrected if this tooth tip (18) does not lie on the pivot axis (A).

2. The machine as claimed in claim 1, **characterized in that** a correcting means (82) separate from the feeler means (60) is provided for the renewed scanning of the workpiece (10) and for output of a correction signal.

3. The machine as claimed in claim 2, **characterized in that** the tool (30) itself provided for machining the workpieces (10) forms part of the correcting means (82).

4. The machine as claimed in claim 3, **characterized in that** the tool (30) is an electrically conductive member of an electric circuit which is closed through the workpiece (10).

5. The machine as claimed in any one of claims 1 to 4,
**characterized in that**
- the barrier (70) is located a certain distance (X) ahead of the pivot axis (A),
- the control means (80) is programmed such that the workpiece slide (42) is advanced by this distance (X) whenever the control means has received a signal which is released as the cutting tooth (12) arrives at the barrier (70), and
- the control means (80) furthermore is programmed such that the advance means (50) does not become active until the workpiece slide (42) has travelled through said distance (X).

6. Machine as claimed in any one of claims 1 to 5,
**characterized in that** the advance means (50) is controlled such that
- its advance finger (58) engages in a respective first tooth gap of the workpiece (10),
- advances the cutting tooth (12) whose tooth tip (18) has been scanned by the feeler means (60) beyond the desired position of the tooth face (14) thereof,
- the advance finger (58) then retracts, skipping the next successive cutting tooth (12),
- the advance finger (58) then engages in the tooth gap following it and, during a renewed forward movement, advances the tooth face (14) of this next successive cutting tooth (12) into the desired position.

## Revendications

1. Dispositif pour usiner des pièces à usiner (10) présentant des dents de coupe (12), en particulier des lames de scie, comprenant
- un châssis de machine (20), sur lequel est disposé fixe un axe de pivotement (A),
- un corps de guidage (22) qui définit un axe de levage (D) s'étendant transversalement à l'axe de pivotement (A),
- un chariot de levage (24), qui est guidé coulissant sur le corps de guidage (22) le long de l'axe de levage (D),
- un chariot porte-outil (26) qui définit un axe de broche (E) s'étendant transversalement à l'axe de levage (D) et pouvant être avancé le long de celui-ci sur le chariot de levage (24),
- une broche porte-outil (28) qui est montée pouvant être entraînée en rotation autour de l'axe de broche (E) sur le chariot porte-outil (26) et peut être équipée d'un outil (30) pouvant être entraîné en rotation,
- un guide de chariot porte-pièce (40) qui s'étend transversalement à l'axe de pivotement (A) et forme avec l'axe de levage (D) un angle réglable,
- un chariot porte-pièce (42) qui est guidé sur le guide de chariot porte-pièce (40) et définit avec un porte-pièce (44) formé sur lui un plan médian (G) normal à l'axe de pivotement (A),
- un palpeur (60) qui prend au moins temporairement une position de mesure dans laquelle arrive la pointe de dent (18) d'une dent de coupe (12) dirigée vers l'axe de pivotement (A) d'une pièce à usiner (10) prise dans le porte-pièce (44) lorsque le chariot porte-pièce (42) est déplacé à partir d'une position de chargement éloignée de l'axe de pivotement (A) dans la direction de l'axe de pivotement (A), pour relever la distance des dents de coupe (12) de la pièce à usiner (10) au porte-pièce (44)
- un dispositif d'avance (50) comprenant un doigt d'avance (58) qui peut s'appliquer par intermittence respectivement à une face d'attaque de dent (14) pour faire avancer celle-ci dans une position de consigne dans laquelle elle se trouve dans un plan contenant l'axe de pivotement (A) et
- une commande numérique (80) pour les déplacements du chariot porte-outil (26) et du chariot porte-pièce (42) en fonction de signaux du palpeur (60),
**caractérisé en ce que**
- le palpeur (60) présente une barrière (70) qui a, mesurée dans ledit plan médian (G) transversalement par rapport au guide de chariot porte-pièce (40), une longueur (L) qui est plus grande que (T) le plus grand pas de dents (T) de la pièce à usiner (10),
- la commande (80) est programmée de telle façon que le palpeur (60) devienne actif avant le dispositif d'avance (50) pour palper la pointe de dent (18) d'une dent de coupe (12) sans considération de la position de la face d'attaque de dent (14) correspondante, et
- la commande (80) est de plus programmée de telle façon que la pièce à usiner (10) soit à nouveau palpée à la tête de dent (18) de la dent de coupe (12) dont la face d'attaque de dent (14) prend sa position de consigne et que la position du chariot porte-pièce (42) soit corrigée lorsque cette pointe de dent (18) ne se trouve pas sur l'axe de pivotement (A).

2. Dispositif selon la revendication 1,
**caractérisé en ce que** pour palper à nouveau la pièce à usiner (10) et émettre un signal de correction, on prévoit un dispositif de correction (82) séparé du palpeur (60).

3. Dispositif selon la revendication 2,
**caractérisé en ce que** l'outil (30) prévu pour usiner les pièces à usiner (10) fait lui-même partie du dispositif de correction (82).

4. Dispositif selon la revendication 3,
**caractérisé en ce que** l'outil (30) est un élément conducteur électrique d'un circuit électrique qui est fermé par la pièce à usiner (10).

5. Dispositif selon l'une quelconque des revendications 1 à 4, **caractérisé en ce que**
- l'armoire (70) est montée d'une certaine distance (X) en avant de l'axe de pivotement (A),
- la commande (80) est programmée de telle façon que le chariot porte-pièce (42) continue d'être déplacé respectivement de cette distance (X) après que la commande a reçu un signal émis à l'arrivée d'une dent de coupe (12) à la barrière (70), et
- la commande (80) est de plus programmée de telle façon que le dispositif d'avance (50) ne devienne actif qu'à partir du moment où le chariot porte-pièce (42) a parcouru ladite distance (X).

6. Dispositif selon l'une quelconque des revendications 1 à 5, **caractérisé en ce que** le dispositif d'avance (50) est commandé de telle façon que
- son doigt d'avance (58) pénètre respectivement dans un premier entre-dent de la pièce à usiner (10),
- fait avancer la dent de coupe (12) dont la pointe de dent (18) a été palpée par le palpeur (60) au-delà de la position de consigne de sa face d'attaque de dent (14),
- le doigt d'avance (58) se déplace ensuite en arrière en sautant la dent de coupe suivante (12),
- le doigt d'avance (58) pénètre ensuite dans l'entre-dent qui le suit et fait avancer, lors d'un nouveau déplacement en avant, la face d'attaque de dent (14) de cette dent de coupe venant immédiatement après (12) dans la position de consigne.
